# EUROPEAN PATENT SPECIFICATION

(11) **EP 2 082 835 B1**
(45) Date of publication and mention of the grant of the patent: **23.03.2016**
(21) Application number: 09250181.6
(22) Date of filing: 23.01.2009
(51) Int. Cl.: B24D 18/00, B24D 7/10, B28D 1/14

(54) **Method of producing perforated honeycomb structure body**
Verfahren zur Herstellung eines perforierten Wabenstrukturkörpers
Procédé de production de corps à structure en nids d'abeille perforé

(30) Priority: 24.01.2008 JP 2008013765
(43) Date of publication of application: 29.07.2009
(73) Proprietor: NGK Insulators, Ltd., Nagoya-City, Aichi Pref. 467-8530 (JP)
(72) Inventor: Hironaga, Masayuki, Aichi-ken 467-8530 (JP); Fujiyama, Masahiro, Aichi-ken 467-8530 (JP); Inoue, Takahiro, Aichi-ken 467-8530 (JP)
(74) Representative: Naylor, Matthew John

(56) References cited:
- DE-A1- 4 024 399
- GB-A- 1 214 393
- JP-A- 2006 116 660
- US-A- 5 373 634

## Description

### [Technical Field]

The present invention relates to a method of producing a perforated honeycomb structure body having a hole that can receive a sensor or the like and is formed from the surface of the outer wall of the honeycomb structure body to pass through part of the outer wall and the partition wall. More particularly, the present invention relates to a production method that can easily and inexpensively produce a perforated honeycomb structure body while effectively preventing chipping when grinding a hole (see for example US-A-5373634).

### [Background Art]

Various attempts to improve the exhaust gas purification performance of a honeycomb structure body that supports a catalyst have been made in order to deal with tightened exhaust gas regulations. Toxic substances subject to the exhaust gas regulations are generally discharged in large amounts immediately after startup when the catalyst temperature is low.

In recent years, a converter system that reduces toxic substances discharged immediately after startup of an engine by providing a honeycomb structure body that supports a catalyst directly under an exhaust manifold to immediately activate the catalyst utilizing high-temperature exhaust gas has been put to practical use.

In order to reduce emission of toxic substances, it is also important to check deterioration status in purification performance by monitoring the purification performance of the catalyst-carrying honeycomb structure body that has been installed as a purification means. For example, two oxygen sensors are disposed on the front side and the rear side of the honeycomb structure body, and the purification performance of the honeycomb structure body is monitored utilizing the oxygen sensors.

However, when installing the honeycomb structure body and the sensors directly under the exhaust manifold, since the space for disposing the honeycomb structure body and the sensors is small, the size of the honeycomb structure body must be reduced to a large extent in order to provide a space for disposing the sensors. As a result, the desired purification performance may not be obtained due to a reduction in the amount of catalyst.

Therefore, technology that forms a groove, a hole, or edging by partially removing (cutting) the partition wall of the honeycomb structure body to form a sensor insertion area in the honeycomb structure body has been disclosed (see Patent Document 1, for example).

[Patent Document 1] JP-A-2003-225576

### [Disclosure of the Invention]

A grinder is used when forming a groove or edging by partially removing the partition wall of the honeycomb structure body. A wheel grinder, a.drill, an end mill, or the like is used when forming a hole by partially removing the partition wall of the honeycomb structure. body.

However, when forming a hole (e.g., sensor insertion area) that is formed from the outer wall of the honeycomb structure body to pass through part of the partition wall of the honeycomb structure body using a known grinding tool, the sharpness of the grinding tool rapidly deteriorates during grinding so that chipping may occur. When the partition wall is continuously ground using the grinding tool of which the sharpness has deteriorated, the shape of the hole may be distorted, or the honeycomb structure body may break during grinding. Moreover, since such a grinding tool is relatively expensive, the production cost increases due to an increase in grinding cost.

When grinding the honeycomb structure body using a known method, it is necessary to grind the honeycomb structure body at a short grinding pitch while frequently removing the grinding tool in order to suppress chipping. As a result, the step of forming a hole becomes complex.

The present invention was conceived in view of the above-described problems. An object of the present invention is to provide a method that can easily and inexpensively produce a perforated honeycomb structure body having a hole that can receive a sensor or the like and is formed from the surface of the outer wall of the honeycomb structure body to pass through part of the outer wall and the partition wall, while effectively preventing chipping when grinding the hole.

The inventors of the present invention conducted extensive studies in order to achieve the above object. As a result, the inventors found that chipping can be effectively prevented by forming a hole by partially grinding the outer wall and the partition wall of the honeycomb structure body from the outer wall of the honeycomb structure body using a grinding tool that allows swarf to be sufficiently discharged during grinding (i.e., a wheel grinder having grooves formed in its surface along the grinding direction, or a ball end mill provided with abrasive grains on its end). This finding has led to the completion of the present invention.

According to the present invention, the following method of producing a perforated honeycomb structure body is provided.

[1] A method of producing a perforated honeycomb structure body comprising: (A) mixing and kneading a forming raw material that includes at least one of a ceramic raw material and a metal raw material to obtain a kneaded clay; (B) forming the kneaded clay into a honeycomb shape to obtain a honeycomb formed body; (C) drying and firing the honeycomb formed body to obtain a honeycomb structure body, the honeycomb structure body including a porous partition wall that defines a plurality of cells that serve as fluid passages, and an outer wall that is disposed to surround the partition wall; and (D) partially grinding the outer wall and the partition wall of the honeycomb structure body from a surface of the outer wall of the honeycomb structure body using a wheel grinder having grooves formed in its surface along a grinding direction, or a ball end mill provided with abrasive grains on its end, to obtain a perforated honeycomb structure body having a hole that is formed through part of the outer wall and the partition wall.
[2] The method of producing a perforated honeycomb structure body according to [1], wherein the abrasive grains are disposed on the ball end mill by electrodeposition.
[3] The method of producing a perforated honeycomb structure body according to [1], wherein the wheel grinder has two or more grooves having a maximum width of 0.5 mm or more, a total width of the two or more grooves being 30% or less of a peripheral length of the wheel grinder in a rotation direction.
[4] The method of producing a perforated honeycomb structure body according to any one of [1] to [3], wherein the outer wall and the partition wall are partially ground while setting a feed amount per rotation of the wheel grinder or the ball end mill at 0.002 to 0.15 mm.
[5] The method of producing a perforated honeycomb structure body according to any one of [1] to [4], wherein the hole is formed in a direction normal to the surface of the outer wall of the honeycomb structure body, or formed in a direction at an angle of ±45° with respect to the direction normal to the surface of the outer wall of the honeycomb structure body.

The method of producing a perforated honeycomb structure body according to the present invention can easily and inexpensively produce a perforated honeycomb structure body while effectively preventing chipping that occurs when grinding the hole.

Specifically, when grinding the outer wall and the partition wall of the honeycomb structure body using a wheel grinder having grooves formed in its surface along the grinding direction or a ball end mill provided with abrasive grains on its end, since swarf produced by grinding is discharged through the grooves in the wheel grinder or the opening between the blades of the ball end mill, adhesion of swarf to the end of the tool (i.e., an area in which the abrasive grains are provided) can be effectively prevented.

Therefore, since the sharpness of the grinding tool deteriorates to only a small extent, chipping can be effectively prevented so that a hole having a normal shape can be formed stably and successively. Since the temperature of the tool does not increase to a large extent, the life of the tool increases so that a perforated honeycomb structure body can be produced inexpensively. Since a hole can be formed by grinding the honeycomb structure body by one feed (i.e., one step) by utilizing the above-mentioned tool, the grinding step is significantly facilitated.

### [Brief Description of the Drawings]

[FIG. 1] FIG. 1 is a perspective view showing an example of a perforated honeycomb structure body produced by one embodiment of a method of producing a perforated honeycomb structure body according to the present invention.
[FIG. 2] FIG. 2. is a plan view showing the end face of the perforated honeycomb structure body shown in FIG. 1.
[FIG. 3] FIG. 3 is a plan view showing the side of the perforated honeycomb structure body shown in FIG. 1.
[FIG. 4] FIG. 4 is a perspective view schematically showing the honeycomb structure body obtained by a step (C) of one embodiment of the method of producing a perforated honeycomb structure body according to the present invention.
[FIG. 5A] FIG. 5A is a schematic view showing an example of a wheel grinder used in one embodiment of the method of producing a perforated honeycomb structure body according to the present invention. FIG. 5A is a plan view showing the side of the wheel grinder.
[FIG. 5B] FIG. 5B is a schematic view showing an example of a wheel grinder used in one embodiment of the method of producing a perforated honeycomb structure body according to the present invention. FIG. 5B is a plan view showing the tip of the wheel grinder.
[FIG. 6A] FIG. 6A is a schematic view showing an example of a ball end mill used in one embodiment of the method of producing a perforated honeycomb structure body according to the present invention. FIG. 6A is a plan view showing the side of the ball end mill.
[FIG. 6B] FIG. 6B is a schematic view showing an example of a ball end mill used in one embodiment of the method of producing a perforated honeycomb structure body according to the present invention. FIG. 6B is a plan view showing the tip of the ball end mill.
[FIG. 7A] FIG. 7A is a perspective view illustrative of an example of a step (D) of one embodiment of the method of producing a perforated honeycomb structure body according to the present invention.
[FIG. 7B] FIG. 7B is a perspective view illustrative of an example of the step (D) of one embodiment of the method of producing a perforated honeycomb structure body according to the present invention.
[FIG. 8A] FIG. 8A is a perspective view illustrative of another example of the step (D) of one embodiment of the method of producing a perforated honeycomb structure body according to the present invention.
[FIG. 8B] FIG. 8B is a perspective view illustrative of another example of the step (D) of one embodiment of the method of producing a perforated honeycomb structure body according to the present invention.
[FIG. 9A] FIG. 9A is a perspective view illustrative of another example of the step (D) of one embodiment of the method of producing a perforated honeycomb structure body according to the present invention.
[FIG. 9B] FIG. 9B is a plan view showing the end face of the perforated honeycomb structure body shown in FIG. 9A.
[FIG. 10A] FIG. 10A is a perspective view illustrative of a further example of the step (D) of one embodiment of the method of producing a perforated honeycomb structure body according to the present invention.
[FIG.10B] FIG. 10B is a plan view showing the end face of the perforated honeycomb structure body shown in FIG. 10A.

### [Explanation of Symbols]

1: perforated honeycomb structure body, 2: outer wall, 3: partition wall, 4: cell, 5: hole, 10: honeycomb structure body, 11: metal shaft, 12: abrasive grains, 13: groove, 14: wheel grinder, 21: ball blade, 22: abrasive grains, 24: ball end mill

### [Best mode for carrying out the Invention]

Embodiments of the present invention are described below. Note that the present invention is not limited to the following embodiments.

### [1] Method of producing perforated honeycomb structure body:

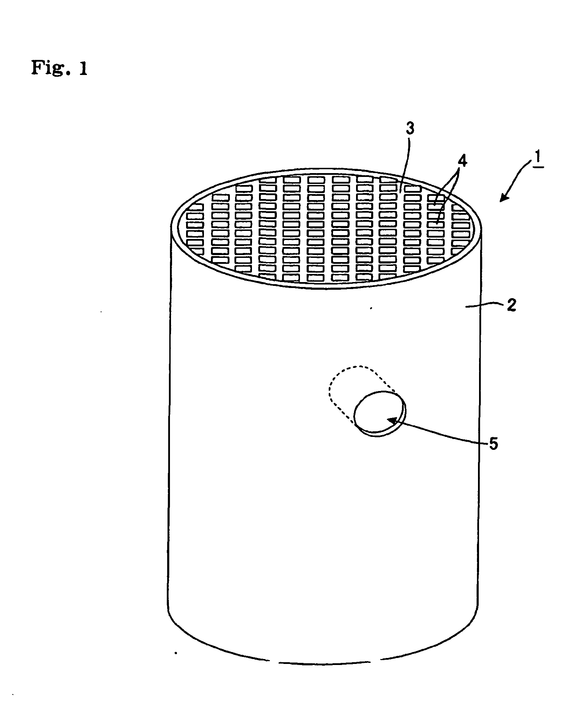

A method of producing a perforated honeycomb structure body according to this embodiment is used to produce a perforated honeycomb structure body 1 shown in FIGS. 1 to 3 that includes a porous partition wall 3 that defines a plurality of cells 4 that serve as fluid passages, and an outer wall 2 that is disposed to surround the partition wall 3, a hole 5 being formed from the surface of the outer wall 2 to pass through part of the outer wall 2 and the partition wall 3.

The method of producing a perforated honeycomb structure body according to this embodiment includes (A) mixing and kneading a forming raw material that includes at least one of a ceramic raw material and a metal raw material to obtain a kneaded clay, (B) forming the kneaded clay into a honeycomb shape to obtain a honeycomb formed body, (C) drying and firing the honeycomb formed body to obtain a honeycomb structure body that has the above-mentioned partition wall and outer wall, and (D) partially grinding the outer wall and the partition wall of the honeycomb structure body from the surface of the outer wall of the honeycomb structure body using a wheel grinder having grooves formed in its surface along a grinding direction, or a ball end mill provided with abrasive grains on its end, to obtain a perforated honeycomb structure body having a hole that is formed through part of the outer wall and the partition wall.

According to this configuration, a perforated honeycomb structure body can be easily and inexpensively produced while effectively preventing chipping when grinding the hole. Specifically, a perforated honeycomb structure body formed by the above method has a hole that. is formed from the surface of the outer wall to pass through part of the outer wall and the partition wall, the hole and its nearby area being substantially free from chipping that occurs due to grinding. It is preferable that the hole be formed in the direction normal to the surface of the outer wall of the honeycomb structure body, or formed in a direction at an angle of ±45° with respect to the direction normal to the surface of the outer wall. It is more preferable that the hole be formed through part of the outer wall and the partition wall of the honeycomb structure body by partially grinding the outer wall and the partition wall of the honeycomb structure body from the surface of the outer wall of the honeycomb structure body using a wheel grinder having grooves formed in its surface along the grinding direction, or a ball end mill provided with abrasive grains on its end. The expression "substantially free from chipping that occurs due to grinding" refers to a state in which chipping is not observed when observed with the naked eye. (please confirm the adequacy of this portion)

Specifically, when grinding the outer wall and the partition wall of the honeycomb structure body using a wheel grinder having grooves formed in its surface along the grinding direction or a ball end mill provided with abrasive grains on its end, since swarf produced by grinding is discharged through the grooves formed in the wheel grinder or the opening between the blades of the ball end mill, adhesion of swarf to the end of the tool (i.e., an area in which the abrasive grains are disposed) can be effectively prevented.

Therefore, since the sharpness of the grinding tool deteriorates to only a small extent, chipping can be effectively prevented so that a hole having a normal shape can be formed stably and successively. Since the temperature of the tool does not increase to a large extent, the life of the tool increases so that the perforated honeycomb structure body can be produced inexpensively. Since the hole can be formed by grinding the honeycomb structure body by one feed (i.e., one step) by utilizing the above-mentioned tool, the grinding step is significantly facilitated. Moreover, abnormal noise does not occur during grinding. Note that abnormal noise occurs during grinding when the sharpness of the grinding tool has deteriorated, or an abnormal grinding operation is performed, for example.

The perforated honeycomb structure body 1 (see FIGS. 1 to 3) produced by the method of producing a perforated honeycomb structure body according to this embodiment may be used as a honeycomb filter (e.g., diesel particulate filter (DPF)) or a catalyst carrier. The perforated honeycomb structure body 1 may be used in a state in which a sensor (e.g., a sensor that monitors the purification performance of the perforated honeycomb structure body 1) is disposed in the hole 5.

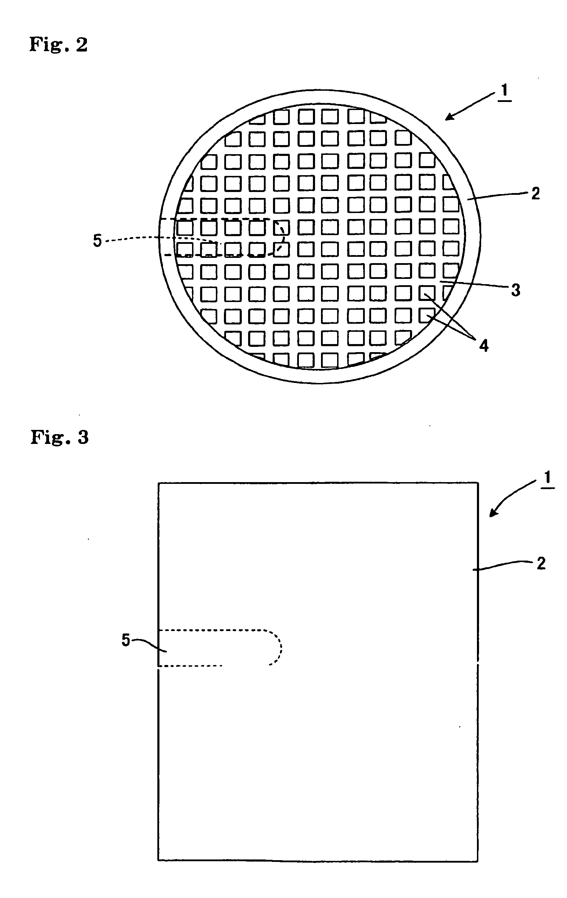

FIG. 1 is a perspective view showing an example of a perforated honeycomb structure body produced by the method of producing a perforated honeycomb structure body according to this embodiment, FIG. 2 is a plan view showing the end face of the perforated honeycomb structure body shown in FIG. 1, and FIG. 3 is a plan view showing the side of the perforated honeycomb structure body shown in FIG. 1.

Each step of the method of producing a perforated honeycomb structure body according to this embodiment is described in detail below.

### [1-1] Step (A):

In the step (A), the forming raw material that includes at least one of a ceramic raw material and a metal raw material is mixed and kneaded to obtain a kneaded clay.

As the ceramic raw material used in the step (A), a ceramic raw material used to produce a known honeycomb structure body may be suitably used. As the ceramic raw material used to obtain a kneaded clay, a raw material that forms a ceramic after firing a formed body obtained by forming a kneaded clay may be used. For example, the ceramic raw material may be at least one ceramic raw material selected from the group consisting of silicon, titanium, zirconium, silicon carbide, boron carbide, titanium carbide, zirconium carbide, silicon nitride, boron nitride, aluminum nitride, alumina, zirconia, mullite, a cordierite-forming raw material, aluminum titanate, and sialon.

The metal raw material may be at least one metal selected from the group consisting of copper, aluminum, iron, nickel, and silicon, for example. These ceramic raw materials and metal raw materials may be used either individually or in combination.

The forming raw material may optionally include a binder, a pore-forming agent, a dispersant, a dispersion medium, and the like in addition to the ceramic raw material or the metal raw material.

In the method of producing a perforated honeycomb structure body according to this embodiment, it is preferable to use an organic binder as an additive that functions as a reinforcing agent that provides the kneaded clay with fluidity during forming and maintains the mechanical strength of the unfired honeycomb formed body.

Examples of the organic binder include an organic polymer and the like. Specific examples of the organic binder include hydroxypropoxylmethyl cellulose, hydroxypropylmethyl cellulose, methyl cellulose, hydroxyethyl cellulose, carboxymethyl cellulose, polyvinyl alcohol, and the like. These organic binders may be used either individually or in combination.

The content of the organic binder is not particularly limited, but is preferably 2 to 10 mass% based on the total amount of the kneaded clay. If the content of the organic binder is too low, sufficient formability may not be obtained. If the content of the organic binder is too high, heat is generated in the firing step so that cracks may occur.

When producing a perforated honeycomb structure body having a high porosity, it is preferable that the forming raw material include a pore-forming agent. Examples of the pore-forming agent include graphite, flour, starch, a phenol resin, polymethyl methacrylate, polyethylene, polyethylene terephthalate, a resin foam (e.g., acrylonitrile-based plastic balloon), and the like.

The shape, size, distribution, and the like of pores can be adjusted corresponding to the application of the perforated honeycomb structure body by utilizing the pore-forming agent. A perforated honeycomb structure body having a high porosity can be obtained by increasing the porosity of the perforated honeycomb structure body. The pore-forming agent forms pores, but is burned down during firing.

It is preferable to use the resin foam as the pore-forming agent from the viewpoint of suppressing generation of carbon dioxide and toxic gas and suppressing cracks. In particular, since a microcapsule formed of the resin foam is hollow, a porous honeycomb structure body having a high porosity can be obtained by adding a small amount of resin. Moreover, since only a small amount of heat is generated during firing, cracks that occur due to thermal stress can be reduced.

The content of the pore-forming agent is not particularly limited, but is preferably 0.1 to 50 mass% based on the total amount of the kneaded clay. If the content of the pore-forming agent is too low, a sufficient porosity may not be achieved. If the content of the pore-forming agent is too high, the strength of the resulting product may decrease due to an excessive increase in porosity.

In the method of producing a perforated honeycomb structure body according to this embodiment, it is preferable that the forming raw material include a dispersant in order to obtain a homogeneous forming raw material mixture. It is preferable to use a surfactant as the dispersant. The surfactant improves the dispersibility of the raw material particles, and facilitates orientation of the raw material particles in the forming step.

The surfactant may be an anionic surfactant, a cationic surfactant, a nonionic surfactant, or an amphoteric surfactant. Among these, it is preferable use the anionic surfactant. Examples of the anionic surfactant include a fatty acid salt, an alkyl sulfate salt, a polyoxyethylene alkyl ether sulfate salt, a polycarboxylate, a polyacrylate, a polyoxyethylene alkyl ether of a nonionic surfactant, a polyoxyethylene glycerol fatty acid ester, a polyoxyethylene sorbitan (or sorbitol) fatty acid ester, and the like.

The content of the surfactant is not particularly limited, but is preferably 0.01 to 5 mass% based on the total amount of the kneaded clay. If the content of the surfactant is too low, it may be difficult to homogenously mix each component of the forming raw material. If the content of the surfactant is too high, the function of the binder may be impaired so that a formed body may not be obtained.

It is preferable that the forming raw material include water as a dispersion medium. The content of the dispersion medium may be adjusted so that the kneaded clay has appropriate hardness when forming the kneaded clay. The content of the dispersion medium is preferably 15 to 50 mass% based on the total amount of the kneaded clay. If the content of the dispersion medium is too low, the kneaded clay may become too hard so that it may difficult to form the kneaded clay. If the content of the dispersion medium is too high, the kneaded clay may become too soft.

In the method of producing a perforated honeycomb structure body according to this embodiment, some or all of the organic binder, the pore-forming agent, the dispersant, and the dispersion medium may be added when mixing or kneading the forming raw material.

An apparatus used to mix the forming raw material is not particularly limited. For example, a mixer such as a Henschel mixer may be used.

An apparatus used to knead the mixed forming raw material to prepare a kneaded clay is not particularly limited. For example, a kneader such as a sigma kneader, a Banbury mixer, a screw extruder, or a vacuum kneader may be used. The shape of the kneaded clay is not particularly limited. It is preferable that the kneaded clay have a columnar shape or the like so that the kneaded clay can be easily introduced into a forming apparatus in the subsequent forming step.

### [1-2] Step (B):

In the step (B), the kneaded clay obtained by the step (A) is formed into a honeycomb shape to obtain a honeycomb formed body.

The method of forming the honeycomb formed body is not particularly limited. For example, an extrusion forming method, an injection forming method, a press forming method, or the like may be used. It is preferable to extrude the kneaded clay prepared as described above using a die that achieves the desired cell shape, partition wall thickness, and cell density, for example.

The honeycomb formed body includes a partition wall that defines a plurality of cells that serve as fluid passages. The outer wall of the honeycomb structure body may be formed when forming the kneaded clay to produce the honeycomb formed body. Alternatively, a honeycomb formed body without an outer wall may be formed, and an outer wall may be formed by applying a coating material that forms an outer wall to the outer circumferential surface of the honeycomb formed body or a fired body obtained by firing the honeycomb formed body.

The thickness of the partition wall of the honeycomb formed body obtained by the step (B) is not particularly limited. For example, it is possible to form a honeycomb structure body having a thin partition wall that has been produced to deal with a demand for a reduction in pressure loss, heat capacity, and the like. The thickness of the partition wall is preferably 0.01 to 0.50 mm.

The cells defined by the partition wall of the honeycomb formed body may have a circular, oval, elliptical, quadrangular, octagonal, or asymmetrical cross-sectional shape, for example. The cell density of the honeycomb formed body is preferably 6 to 2000 cells/in² (0.9 to 311 cells/cm²), and more preferably 50 to 400 cells/in² (7.8 to 62 cells/cm²), taking account of the strength and the effective geometric surface area (GSA) of the resulting honeycomb structure body and the pressure loss when gas flows.

The shape of the honeycomb formed body may be appropriately selected corresponding to the application. For example, the cross-sectional shape of the honeycomb formed body in the diametrical direction may be a triangle, a rectangle, a square, a diamond, a trapezoid, an ellipse, a circle, a track shape, a semi-elliptical shape, a semi-circle, or the like.

### [1-3] Step (C):

In the step (C), the honeycomb formed body obtained by the step (B) is dried and fired to obtain a honeycomb structure body having a partition wall and an outer wall.

The honeycomb formed body may be dried using a known method. Specifically, the honeycomb formed body may be dried by hot-blast drying, microwave drying, dielectric drying, drying under reduced pressure, vacuum drying, freeze drying, or the like. It is preferable to use at least one drying method selected from the group consisting of dielectric drying, microwave drying, and hot-blast drying. After drying the honeycomb formed body, each end face of the honeycomb formed body may optionally be cut by a given length.

When producing a filter (e.g., DPF) in which given cells of which one end is open and the other end is plugged and cells (remaining cells) of which one end is plugged and the other end is open are disposed alternately as the honeycomb formed body, it is preferable to plug the ends of the cells of the undried or dried honeycomb formed body before firing the honeycomb formed body.

The plugging method is not particularly limited. For example, an adhesive sheet is attached to one end face of the honeycomb formed body. Holes are formed in the adhesive sheet in areas corresponding to the plugging target cells by laser processing utilizing image processing or the like to form a plugging section formation mask. A plugging slurry that contains a ceramic raw material and the like is stored in a storage container or the like.

The end face of the honeycomb formed body provided with the mask is immersed in the plugging slurry contained in the storage container so that the plugging target cells are filled with the plugging slurry through the holes formed in the mask to form plugging sections. An adhesive sheet is also attached to the other end face of the honeycomb formed body. Holes are formed in the adhesive sheet in areas corresponding to the cells of which one end face is not plugged, and plugging sections are formed in the same manner as described above.

After forming the plugging sections by filling the cells with the plugging slurry, the plugging sections are preferably dried. The drying method is not particularly limited. The plugging sections may be dried in the same manner as the honeycomb formed body.

The honeycomb formed body is then fired at a given temperature. The firing conditions may he appropriately set corresponding to the type of raw material used to prepare the kneaded clay and the like. It is preferable to use a combustion furnace, an electric furnace, or the like as a firing apparatus.

In the method of producing a perforated honeycomb structure body according to this embodiment, when the honeycomb formed body does not have an outer wall that is integrally formed with the partition wall, an outer wall is formed on the periphery of the fired honeycomb structure body using a material such as cement. Even if the honeycomb formed body has an outer wall that is integrally formed with the partition wall, the periphery of the fired honeycomb structure body may optionally be ground to a given shape, and an outer wall may be formed using a material such as cement.

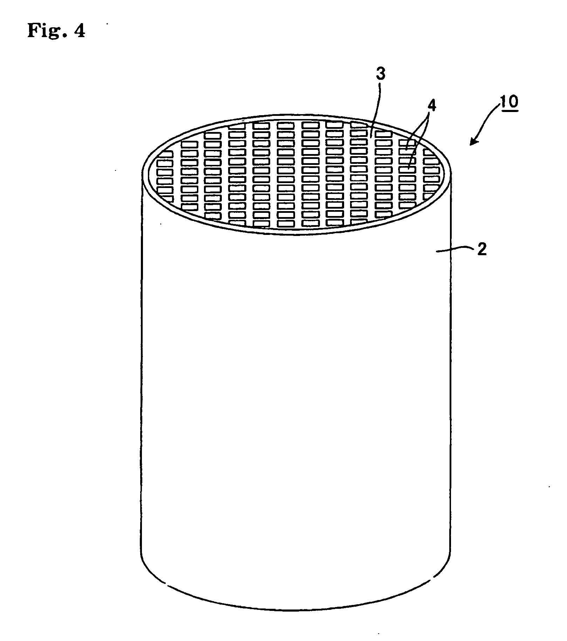

A honeycomb structure body 10 that includes a porous partition wall 3 that define a plurality of cells 4 that serve as fluid passages and an outer wall 4 that is disposed to surround the partition wall 3 (see FIG. 4) is thus obtained. FIG. 4 is a perspective view schematically showing the honeycomb structure body obtained by the step (C) of the method of producing a perforated honeycomb structure body according to this embodiment.

### [1-4] Step (D):

In the step (D), the outer wall and the partition wall of the honeycomb structure body are partially ground from the surface of the outer wall of the honeycomb structure body using a wheel grinder having grooves formed in its surface along the grinding direction, or a ball end mill provided with abrasive grains on its end, to obtain a perforated honeycomb structure body having a hole that is formed through part of the outer wall and the partition wall.

### [1-4] Wheel grinder:

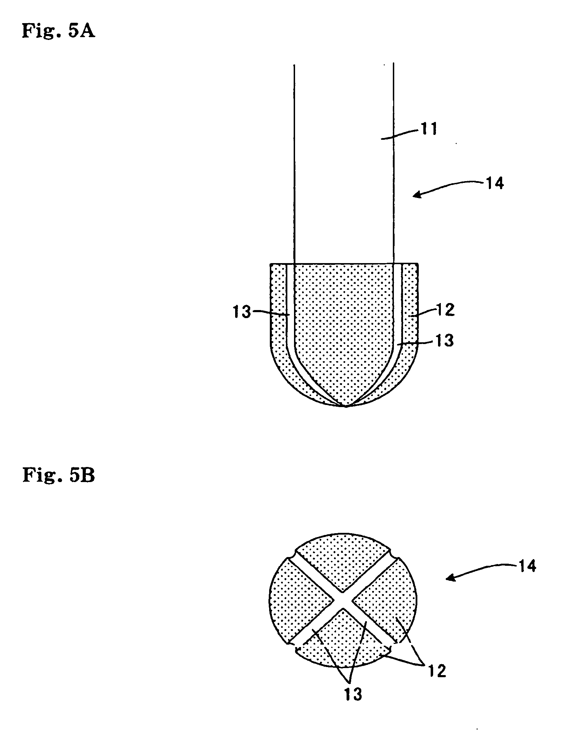

The wheel grinder may be a wheel grinder 14 shown in FIGS. 5A and 5B in which abrasive grains 12 are disposed on the outer circumferential surface and the end face of a cylindrical metal shaft 11 in one or more layers, grooves 13 being formed in the surface of the wheel grinder along the grinding direction, for example.

Since swarf is discharged through the grooves 13 during grinding, adhesion of swarf to the end of the wheel grinder 14 can be effectively prevented. Therefore, since the sharpness of the wheel grinder 14 deteriorates to only a small extent, chipping can be effectively prevented. Moreover, since the temperature of the wheel grinder 14 does not increase to a large extent during grinding, the life of the wheel (an area in which the abrasive grains 12 are disposed) increases so that a perforated honeycomb structure body can be produced inexpensively. In addition, since the hole 5 (see FIG. 1) can be formed by grinding the honeycomb structure body by one feed (i.e., one step), the grinding step is significantly facilitated.

FIGS. 5A and 5B are schematic views showing an example of the wheel grinder used in the method of producing a perforated honeycomb structure body according to this embodiment. FIG. 5A is a plan view showing the side of the wheel grinder, and FIG. 5B is a plan view showing the end of the wheel grinder.

The metal shaft of the wheel grinder used in the method of producing a perforated honeycomb structure body according to this embodiment may be preferably formed in the same manner as a metal shaft of a known wheel grinder. The material for the metal shaft of the wheel grinder is not particularly limited, but is preferably stainless steel.

The type of abrasive grains of the wheel grinder is not particularly limited. An arbitrary natural grindstone or artificial grindstone may be used. It is preferable to use diamond abrasive grains having a particle diameter of 50 to 300 µm, and more preferably 100 to 200 µm. A honeycomb structure body that contains a ceramic or a sintered metal as the main component can be advantageously ground by utilizing abrasive grains having a particle diameter within the above range. The abrasive grains may be formed of cubic boron nitride (CBN).

In FIGS. 5A and 5B, four grooves 13 that are connected at the center of the tip of the wheel grinder 14 are formed in the wheel grinder 14. Note that the number of grooves is not limited to four insofar as swarf can be discharged through a groove formed along the grinding direction so that adhesion of swarf to the end of the wheel grinder can be effectively prevented. When a plurality of grooves is connected at the center of the tip of the wheel grinder, the number of grooves refers to the number of grooves that extend from the center of the tip of the wheel grinder.

The width of the groove is not particularly limited insofar as swarf can be discharged through the groove and the wheel grinder in which the groove is formed functions sufficiently.

In the method of producing a perforated honeycomb structure body according to this embodiment, it is preferable to use a wheel grinder in which two or more grooves having a width of 0.5 mm or more are formed and the total width of the grooves is 30% or less of the circumferential length of the wheel grinder in the rotation direction. It is more preferable to use a wheel grinder in which grooves have a width of 1 mm or more and the total width of the grooves is 3 to 25% of the circumferential length of the wheel grinder in the rotation direction.

If the grooves have a width of less than 0. 5 mm, swarf may not be discharged sufficiently. As a result, swarf may adhere to the tip of the wheel grinder so that the sharpness of the wheel grinder may deteriorate. If the total width of the grooves is more than 30% of the circumferential length of the wheel grinder in the rotation direction, since the area of the wheel grinder in which the abrasive grains are disposed decreases, the life of the wheel grinder may decrease. Note that the term "circumferential length" refers to the maximum circumferential length in the rotation direction.

The depth of the grooves is preferably 0.3 times or more the width of the grooves. It is more preferable that the grooves have a depth equal to or larger than the width of the grooves. The grooves preferably have a depth that is 1/4th or less of the diameter of the wheel grinder. If the depth of the grooves is less than 0.3 times the width of the grooves, swarf may not be discharged sufficiently. As a result, swarf may adhere to the tip of the wheel grinder so that the sharpness of the wheel grinder may deteriorate. If the depth of the grooves is more than 1/4th of the diameter of the wheel grinder, the wheel grinder may break. Note that the term "diameter of the wheel grinder" refers to the maximum diameter of the wheel grinder.

The thickness of the abrasive grains 12 disposed on the outer circumferential surface and the end face of the metal shaft 11 is preferably three times or more the diameter of the abrasive grains. The abrasive grains 12 may be a metal bond that contains the abrasive grains.

### [1-4B] Ball end mill:

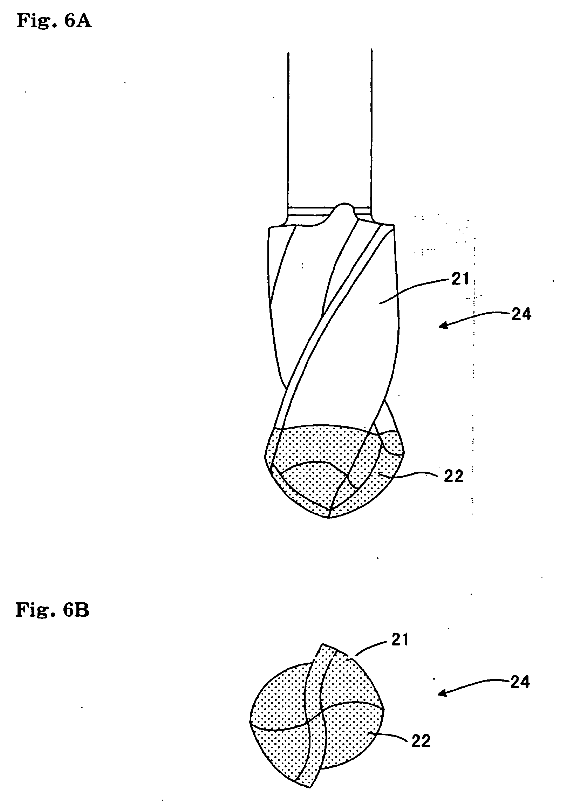

The ball end mill may be a ball end mill 24 shown in FIGS. 6A and 6B that includes two or more ball blades 21, abrasive grains 22 being disposed on the tip of the ball end mill 24.

Since swarf is discharged through the opening between the blades of the ball end mill during grinding, adhesion of swarf to the tip of the ball end mill can be effectively prevented. Therefore, since the sharpness of the abrasive grains of the ball end mill deteriorates to only a small extent, chipping can be effectively prevented. Moreover, since the life of the tool increases, a perforated honeycomb structure body can be produced inexpensively. In addition, since a hole can be formed by grinding the honeycomb structure body by one feed (i.e. , one step), the grinding step is significantly facilitated.

FIGS. 6A and 6B are schematic views showing an example of the ball end mill used in the method of producing a perforated honeycomb structure body according to this embodiment. FIG. 6A is a plan view showing the side of the ball end mill, and FIG. 6B is a plan view showing the tip of the ball end mill.

The blade of the ball end mill used in the method of producing a perforated honeycomb structure body according to this embodiment may be preferably formed in the same manner as a blade of a known ball end mill. The material for the blade of the ball end mill is not particularly limited, but is preferably stainless steel.

When using a drill or the like (except ball end mill) of which the shoulder is formed at an acute angle, chipping that occurs when grinding a hole cannot be suppressed. When using a ball end mill in which abrasive grains are not disposed, since the ball blade wears out to a large extent, it is necessary to frequently replace the ball end mill by another product in order to form a hole having a uniform size. Therefore, the grinding cost increases.

The type of abrasive grains disposed on the tip of the ball end mill used in the method of producing a perforated honeycomb structure body according to this embodiment is not particularly limited. An arbitrary natural grindstone or artificial grindstone may be used. It is preferable to use diamond abrasive grains having a particle diameter of 50 to 300 µm, and more preferably 100 to 200 µm. A honeycomb structure body that contains a ceramic or a sintered metal as the main component can be advantageously ground by utilizing abrasive grains having a particle diameter within the above range. The abrasive grains formed of CBN can be used.

In the method of producing a perforated honeycomb structure body according to this embodiment, it is preferable to use a ball end mill in which the abrasive grains are disposed by electrodeposition. According to this configuration, when the sharpness of the abrasive grains disposed on the tip of the ball end mill has deteriorated, the sharpness of the ball end mill can be recovered by electrodepositing the abrasive grains on the tip of the ball end mill. Therefore, the production cost can be reduced.

The thickness of the abrasive grains (abrasive grain layer) disposed on the tip of the ball end mill is not particularly limited. For example, it is preferable that the thickness of the abrasive grains (abrasive grain layer) be three times or more, and more preferably five times or more the diameter of the abrasive grains. If the thickness of the abrasive grains (abrasive grain layer) is less than three times the diameter of the abrasive grains, the ball end mill may not exhibit sufficient sharpness due to removal of the abrasive grains.

When the abrasive grains are disposed on the tip of the ball end mill, it is preferable to dispose an underlayer that prevents removal of the abrasive grains during grinding. Examples of the underlayer include a nickel plated layer and the like. Removal of the abrasive grains may be prevented by utilizing coated abrasive grains to increase the bonding strength of the abrasive grains with the underlayer.

### [1-4C] Formation of hole:

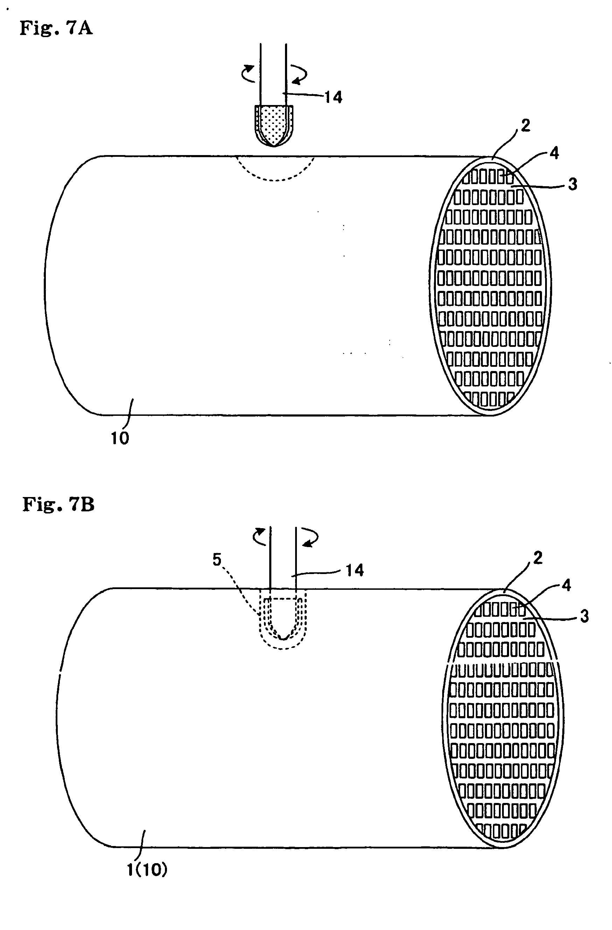

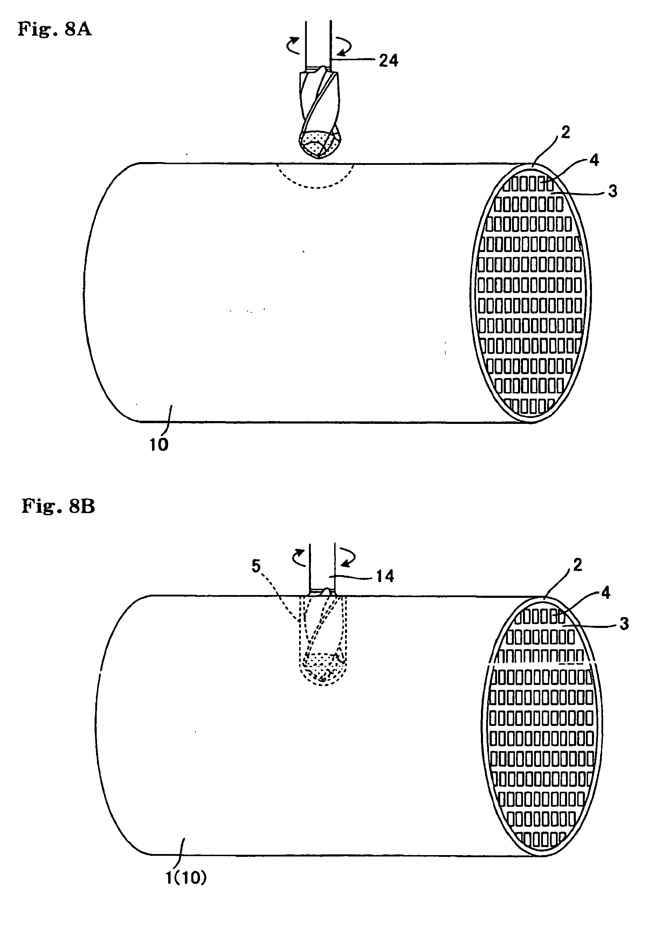

When forming a hole by partially grinding the outer wall and the partition wall of the honeycomb structure body from the surface of the outer wall of the honeycomb structure body using the above-mentioned wheel grinder or ball end mill, the honeycomb structure body 10 is placed so that an area in which the hole 5 is formed (grinding target area) faces upward (i.e., end face of the honeycomb structure body 10 faces sideways), for example, as shown in FIGS. 7A and 7B or FIGS. 8A and 8B. The outer wall 2 and the partition wall 3 of the honeycomb structure body 10 are partially ground from the surface of the outer wall 2 of the honeycomb structure body 10 while rotating the wheel grinder 14 or the ball end mill 24.

FIGS. 7A and 7B are perspective views illustrative of an example of the step (D) of the method of producing a perforated honeycomb structure body according to this embodiment, and FIGS. 8A and 8B are perspective views illustrative of another example of the step (D) of the method of producing a perforated honeycomb structure body according to this embodiment.

The grinding conditions may be appropriately determined corresponding to the material for the honeycomb structure body in which a hole is formed, the thicknesses of the outer wall and the partition wall, the inner diameter and the depth of the hole, and the like. It is preferable to partially grind the outer wall and the partition wall using the wheel grinder or the ball end mill so that the feed amount per rotation is 0.0002 to 0.15 mm. The feed amount per rotation is more preferably 0.004 to 0.1 mm, and still more preferably 0.05 to 0.1 mm.

According to this configuration, since swarf can be efficiently discharged through the grooves formed in the wheel grinder or the opening between the blades of the ball end mill during grinding, the sharpness of the grinding tool deteriorates to only a small extent. If the feed amount per rotation is less than 0.002 mm, slippage may occur on the surface of the abrasive grains so that a seizure phenomenon may occur. If the feed amount per rotation is more than 0.15 mm, chipping may occur.

The feed speed (grinding speed) of the wheel grinder or the ball end mill is not particularly limited, but may be appropriately determined corresponding to the above-mentioned conditions. The specific feed speed may be in the range of the above-mentioned feed amount per rotation.

In the method of producing a perforated honeycomb structure body according to this embodiment, it is preferable to form a hole by one feed (one step) from the viewpoint of the takt time.

The inner diameter and the depth of the hole and the number of holes may be appropriately determined corresponding to the application of the perforated honeycomb structure body.

In the method of producing a perforated honeycomb structure body according to this embodiment, it is preferable to form a hole in the normal direction to the surface of the outer wall of the honeycomb structure body. According to this configuration, a hole can be advantageously formed.

In the method of producing a perforated honeycomb structure body according to this embodiment, a hole may be formed in a direction at an angle of ±45° with respect to the normal direction to the surface of the outer wall of the honeycomb structure body.

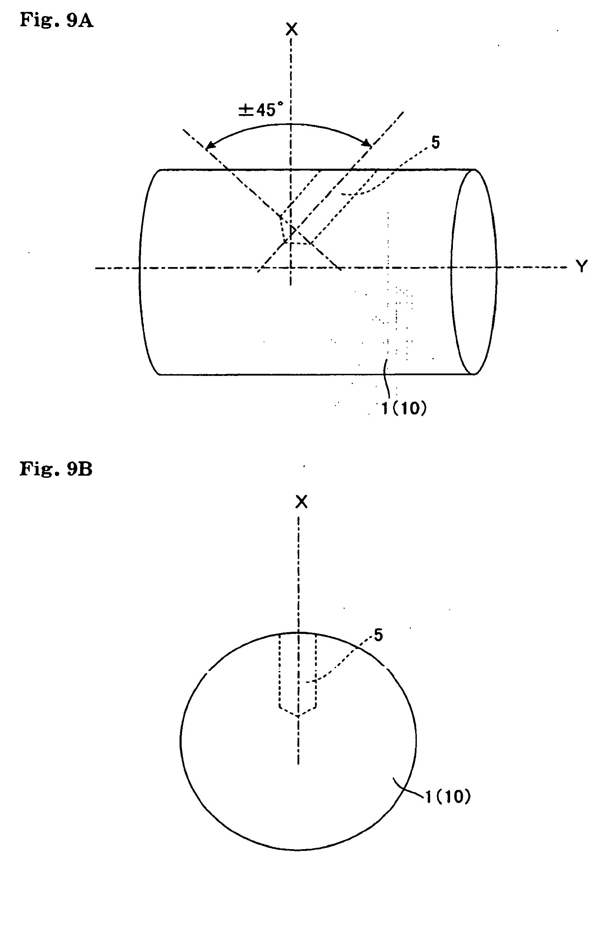

As shown in FIGS. 9A and 9B, a hole may be formed in a direction at an angle of ±45° with respect to a normal direction X to the surface of the outer wall of the honeycomb structure body 10 along an axial direction Y of the honeycomb structure body 10, for example.

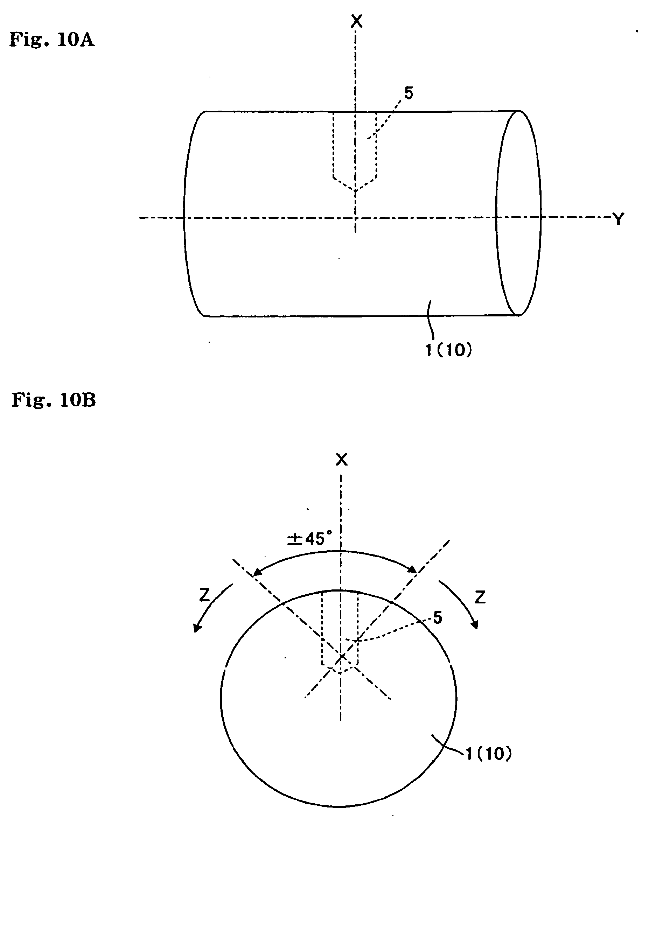

As shown in FIGS. 10A and 10B, a hole may be formed in a direction at an angle of ±45° with respect to a normal direction X to the surface of the outer wall of the honeycomb structure body 10 long a circumferential, direction Z of the honeycomb structure body 10, for example.

FIGS. 9A and 10A are perspective views illustrative of further examples of the step (D) of the method of producing a perforated honeycomb structure body according to this embodiment. FIG. 9B is a plan view showing one end face of the perforated honeycomb structure body shown in FIG. 9A, and FIG. 10B is a plan view showing one end face of the perforated honeycomb structure body shown in FIG. 10A.

When forming a hole in the honeycomb structure body in this manner, a hole can be advantageously formed by setting the feed amount per rotation when the tool passes through the outer wall to be equal to or smaller than the feed amount during normal grinding (i.e., grinding in the normal direction to the surface of the outer wall) if the inclination angle with respect to the normal direction to the surface of the outer wall of the honeycomb structure body is within ±45°. It is preferable to reduce the feed speed when the tool passes through the outer wall as the angle with respect to the normal direction to the surface of the outer wall increases. For example, when the angle with respect to the normal direction to the surface of the outer wall is a maximum (i.e., 45°), it is preferable to reduce the feed speed by reducing the feed amount by a factor of about 0.5 to 0.1.

According to this configuration, chipping that occurs when grinding a hole can be effectively prevented so that a perforated honeycomb structure body can be produced easily and inexpensively.

### [2] Perforated honeycomb structure body:

One embodiment of a perforated honeycomb structure body according to the present invention is described in detail below. The perforated honeycomb structure body according to this embodiment is produced by the above-described method of producing a perforated honeycomb structure body according to the present invention.

As shown in FIGS. 1 to 3, the perforated honeycomb structure body includes the porous partition wall 3 that defines a plurality of cells 4 that serve as fluid passages, and the outer wall 2 that is disposed to surround the partition wall 3, the hole 5 being formed from the surface of the outer wall 2 to pass through part of the outer wall 2 and the partition wall 3.

The porous partition wall of the perforated honeycomb structure body is obtained by forming a kneaded clay formed of a forming raw material that includes at least one of a ceramic raw material and a metal raw material, and drying and firing the formed body. As the forming raw material, a forming raw material prepared in the same manner as the forming raw material described in the embodiment of the above-described method of producing a perforated honeycomb structure body may be suitably used.

The outer wall of the perforated honeycomb structure body may be integrally formed with the partition wall using the forming raw material, or may be formed to cover the periphery of the partition wall using a material such as cement.

The peripheral shape of the perforated honeycomb structure body, the thickness of the partition wall, the cross-sectional shape of the cells, the cell density, and the like are preferably the same as those described as preferable examples in the above-described method of producing a perforated honeycomb structure body.

The inner diameter and the depth of the hole and the number of holes may be appropriately determined corresponding to the application of the perforated honeycomb structure body.

The perforated honeycomb structure body according to this embodiment may be used as a honeycomb filter (e.g., diesel particulate filter (DPF)) or a catalyst carrier. In particular, since the perforated honeycomb structure body according to this embodiment has the hole that can receive a sensor (e.g., a sensor that monitors the purification performance of the perforated honeycomb structure body), the perforated honeycomb structure body according to this embodiment may be suitably used as a DPF that processes automotive exhausts gas or a catalyst carrier.

### [Examples]

The present invention is further described below by way of examples. Note that the present invention is not limited to the following examples. Each evaluation method is described below.

[Chipping]: The tip of the grinding tool used to form a hole in the honeycomb structure body was checked using a microscope ("Hirox"(trade name) manufactured by Keyence Corporation). The tip of the grinding tool was checked before grinding and each time one hundred holes were ground. A case where the amount of abrasive grains protruding from the tip of the grinding tool was sufficient and the amount of abrasive grains removed was small was evaluated as "Good", a case where the amount of abrasive grains protruding from the tip of the grinding tool decreased to a value equal to or larger than half of the initial value and the amount of abrasive grains removed increased to a value equal to or smaller than half of the initial value was evaluated as "Fair", and a case where the amount of abrasive grains protruding from the tip of the grinding tool decreased to a value equal to or larger than half of the initial value or the amount of abrasive grains removed increased to a value equal to or larger than half of the initial value was evaluated as "Bad".

[Noise during grinding]: Noise that occurred when grinding a hole was evaluated evaluated by sensory method (aurally). Specifically, abnormal noise was evaluated in accordance with a four-rank standard (i.e., large, medium, small, and none).

[Hole shape]: The inner diameter of the hole formed in the honeycomb structure body was measured using a tool microscope ("MTM250" manufactured by Olympus Corporation) each time fifty holes were formed.

In the examples and comparative examples, a forming raw material including a ceramic raw material was mixed and kneaded to obtain a kneaded clay. The kneaded clay was formed into a honeycomb shape to obtain a honeycomb formed body. The honeycomb formed body was dried and fired to obtain a honeycomb structure body having a partition wall and an outer wall. The outer wall and the partition wall of the honeycomb structure body were partially ground from the surface of the outer wall of the honeycomb structure body to form a hole. A perforated honeycomb structure body was thus produced.

In the examples and comparative examples, a honeycomb structure body (shape of end face: circle (diameter: 140 mm), shape of honeycomb structure body: cylinder (length: 150 mm), cell shape: quadrangle (1.03×1.03 mm), thickness of outer wall: 300 µm, thickness of partition wall: 62 µm, cell density: 600 cells/in²) was produced using a cordierite-forming raw material as the forming raw material.

### (Example 1)

As a grinding tool shown in FIGS. 5A and 5B, a hole having a depth of 20 mm was formed in each of two hundred honeycomb structure bodies having the above-described configuration using a wheel grinder 14 in which abrasive grains 12 were disposed on the outer circumferential surface and the end face of a cylindrical metal shaft 11 and grooves 13 were formed in the surface of the wheel grinder 14 along the grinding direction to obtain perforated honeycomb structure bodies.

In the wheel grinder, diamond abrasive grains having a particle diameter of 100 to 150 µm were disposed to a thickness of 3 mm. The width of the grooves formed in the wheel grinder was 1.5 mm. Four grooves were formed in the wheel grinder so that the grooves were connected at the center of the tip of the wheel grinder. The outer diameter (maximum outer diameter) of the area of the wheel grinder in which the abrasive grains were disposed was 18 mm. The ratio of the total area of the grooves formed in the wheel grinder to the total area of the wheel grinder in which the abrasive grains were disposed (hereinafter referred to as "groove ratio") was 10.6%.

In Example 1, the rotational speed of the wheel grinder was set at 3000 rpm, and the feed speed was set at 6 mm/min. Each hole was formed by one feed, (one step). The evaluation results for chipping, noise during grinding, and the hole shape are shown in Table 1. The feed amount per rotation in Example 1 was 0.002 mm.

**[Table 1]**

| | | Example 1 | Example 2 | Example 3 | Example 4 | Example 5 | Example 6 | Example 7 | Example 8 |
|---|---|---|---|---|---|---|---|---|---|
| Grinding tool | | Wheel grinder (four qrooves, groove width: 1.5 mm) | | | | | | | |
| Grinding tool rotational speed (rpm) | | 3000 | 3000 | 1000 | 1000 | 3000 | 10000 | 3000 | 3000 |
| Grinding tool feed rate (mm/min) | | 6 | 12 | 4 | 100 | 300 | 1000 | 450 | 150 |
| Grinding tool feed method | | One step | One step | One step | One step | One step | One step | One step | One step |
| Feed amount per rotation (mm) | | 0.002 | 0.004 | 0.004 | 0.1 | 0.1 | 0.1 | 0.15 | 0.05 |
| Groove ratio (%) | | 10.6 | 10.6 | 10.6 | 10.6 | 10.6 | 10.6 | 10.6 | 10.6 |
| Chipping | | Good | Good | Good | Good | Good | Good | Good | Good |
| Noise during grinding | | Small | None | None | None | None | Small | Small | None |
| Hole shape | 1st | - | 18.12 | - | - | 18.14 | - | - | 18.08 |
| | 50th | - | 18.1 | - | - | 18.15 | - | - | 18.06 |
| | 100th | - | 18.11 | - | - | 18.13 | - | - | 18.07 |
| | 150th | - | 18.11 | - | - | 18.13 | - | - | 18.06 |
| | 200th | - | 18.07 | - | - | 18.12 | - | - | 18.04 |

### (Examples 2 to 8)

Two hundred perforated honeycomb structure bodies were produced in the same manner as in Example 1 using a wheel grinder similar to that of Example 1, except that the rotational speed, the feed speed, the feed amount per rotation, and the groove ratio were changed as shown in Table 1.

### (Examples 9 to 15)

Two hundred perforated honeycomb structure bodies were produced in the same manner as in Example 1, except that the groove width of the wheel grinder was changed as shown in Table 2, and the rotational speed, the feed speed, the feed amount per rotation, and the groove ratio were changed as shown in Table 2 in order to check the effect of the groove width.

**[Table 2]**

| | | Example 9 | Example 10 | Example 11 | Example 12 | Example 13 | Example 14 | Example 15 |
|---|---|---|---|---|---|---|---|---|
| Grinding tool | | Wheel grinder | | | | | | |
| | | (four grooves, groove width: 4 mm) | (four grooves, groove width: 0.5 mm) | (tour grooves, groove width: 1 mm) | (two grooves, groove width: 0.5 mm) | (twelve grooves, groove width: 0.5 mm) | (four grooves, groove width: 5 mm) | (four grooves, groove width: 1.5 mm) |
| Grinding tool rotational speed (rpm) | | 3000 | 3000 | 3000 | 1000 | 3000 | 3000 | 1000 |
| Grinding tool feed rate (mm/min) | | 300 | 300 | 300 | 50 | 300 | 300 | 200 |
| Grinding tool feed method | | One step | One step | One step | One step | One step | One step | One step |
| Feed amount per rotation (mm) | | 0.1 | 0.1 | 0.1 | 0.05 | 0.1 | 0.1 | 0.2 |
| Groove ratio (%) | | 28.3 | 3.5 | 7.1 | 1.8 | 10.6 | 35.4 | 10.6 |
| Chipping | | Good | Good | Good | Good | Good | Good | Good |
| Noise dunnq grinding | | None | Small | None | Small | Small | None | Small |
| Hole shape | 1st | 18.27 | 18.32 | 18.25 | - | - | 18.82 | - |
| | 50th | 18.25 | 18.21 | 18.20 | - | - | 18.76 | - |
| | 100th | 18.20 | 18.23 | 18.21 | - | - | 18.55 | - |
| | 150th | 18.21 | 18.17 | 18.20 | - | - | 18.39 | - |
| | 200th | 18.12 | 18.22 | 18.19 | - | - | 18.42 | - |

### (Example 16)

As a grinding tool shown in FIGS. 6A and 6B, a hole hole having a depth of 20 mm was formed in each of two hundred perforated honeycomb structure bodies configured as described above using a ball end mill 24 including two ball blades 21 and abrasive grains 22 disposed on the tip of the ball end mill 24 as the grinding tool.

Diamond abrasive grains having a particle diameter of 100 to 150 µm were disposed on the tip of the ball end mill to a thickness of 0.5 mm.

In Example 16, the rotational speed of the ball end mill was set at 3000 rpm, and the feed speed was set at 12 mm/min. Each hole was formed by one feed (one step). The evaluation results for chipping, noise during grinding, and the hole shape are shown in Table 3.

**[Table 3]**

| | | Example 16 | Example 17 | Example 18 | Example 19 | Example 20 | Example 21 |
|---|---|---|---|---|---|---|---|
| Grindinq tool | | Ball end mill (abrasive grains were provided on the tip) | | | | | |
| Grinding tool rotational speed (rpm) | | 3000 | 1000 | 1000 | 3000 | 3000 | 3000 |
| Grinding tool feed rate (mm/min) | | 12 | 4 | 100 | 300 | 450 | 5 |
| Grinding tool feed method | | One step | One step | One step | One step | One step | One step |
| Feed amount per rotation (mm) | | 0.004 | 0.004 | 0.1 | 0.1 | 0.15 | 0.0017 |
| Chipping | | Good | Good | Good | Good | Good | Good |
| Noise during qrindinq | | None | None | None | None | Small | None |
| Hole shape | 1st | - | 18.46 | - | 18.39 | - | - |
| | 50th | - | 18.42 | - | 18.35 | - | - |
| | 100th | - | 18.40 | - | 18.36 | - | - |
| | 150th | - | 18.38 | - | 18.35 | - | - |
| | 200th | - | 18.38 | - | 18.34 | - | - |

### (Examples 17 to 21)

Two hundred perforated honeycomb structure bodies were produced in the same manner as in Example 16 using a ball end mill similar to that of Example 16, except that the rotational speed, the feed speed, and the feed amount per rotation were changed as shown in Table 3.

### (Comparative Examples 1 to 3)

A hole having a depth of 20 mm was formed in each of two hundred honeycomb structure bodies configured as described above using a wheel grinder in which abrasive grains were disposed on the outer circumferential surface and the end face of a cylindrical metal shaft to produce perforated honeycomb structure bodies. In the wheel grinder, diamond abrasive grains having a particle diameter of 100 to 150 µm were disposed to a thickness of 3 mm. The rotational speed, the feed speed, the feed amount per rotation, and the groove ratio in Comparative Examples 1 to 3 are shown in Table 4.

**[Table 4]**

| | | Comparative Example 1 | Comparative Example 2 | Comparative Example 3 |
|---|---|---|---|---|
| Grinding tool | | Wheel grinder (without grooves) | | |
| Grinding tool rotational speed (rpm) | | 1000 | 1000 | 3000 |
| Grinding tool feed rate (mm/min) | | 50 | 100 | 12 |
| Grinding tool feed method | | One step | One step | One step |
| Feed amount per rotation (mm) | | 0.05 | 0.1 | 0.004 |
| Groove ratio (%) | | 0.0 | 0.0 | 0.0 |
| Chipping | | Good | Good | Fair |
| Noise during grinding | | Medium | Medium | Medium |
| Hole shape | 1^{st} | - | 18.49 | - |
| | 50th | - | 18.42 | - |
| | 100th | - | 18.43 | - |
| | 150th | - | 18.41 | - |
| | 200th | - | 18.40 | - |

### (Comparative Examples 4 to 7)

A hole having a depth of 20 mm was formed in each of two hundred honeycomb structure bodies configured as described above using a ball end mill including two ball blades as the grinding tool to produce perforated honeycomb structure bodies. The rotational speed, the feed speed, and the feed amount per rotation in Comparative Examples 4 to 7 are shown in Table 5.

**[Table 5]**

| | | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|
| Grinding tool | | Ball end mill | | | | Drill (abr asive grains were provided on the tip) | | | |
| Grinding tool rotational speed (rpm) | | 3000 | 1000 | 1000 | 3000 | 3000 | 1000 | 1000 | 3000 |
| Grinding tool feed rate (mm/min) | | 12 | 4 | 100 | 300 | 12 | 4 | 100 | 300 |
| Grinding tool feed method | | One step | One step | One step | 3 mm step | One step | One step | One step | 3 mm step |
| Feed amount per rotation (mm) | | 0.004 | 0.004 | 0.1 | 0.1 | 0.004 | 0.004 | 0.1 | 0.1 |
| Chipping | | Fair | Fair | Good | Good | Fair | Fair | Bad | Bad |
| Noise during grinding | | Small | Small | Small | Small | Medium | Medium | Large | Large |
| Hole shape | 1st | - | - | - | 18.60 | - | - | - | - |
| | 50th | - | - | - | 18.48 | - | - | - | - |
| | 100th | - | - | - | 18.39 | - | - | - | - |
| | 150th | - | - | - | 18.30 | - | - | - | - |
| | 200th | - | - | - | 18.28 | - | - | - | - |

### (Comparative Examples 8 to 11)

A hole having a depth of 20 mm was formed in each of two hundred honeycomb structure bodies configured as described above using a drill (tip angle: 118°, shoulder was formed at an acute angle, the drill was coated with diamond abrasive grains similar to those used in Example 16) as the grinding tool to produce perforated honeycomb structure bodies. The rotational speed, the feed speed, and the feed amount in Comparative Examples 8 to 11 are shown in Table 5.

According to the production method of Examples 1 to 21, swarf could be discharged through the grooves formed in the wheel grinder or the opening between the blades of the ball end mill. Therefore, the sharpness of the grinding tool deteriorated to only a small extent so that chipping could be effectively suppressed. As a result, a hole having a normal shape could be formed stably. The two hundred honeycomb structure bodies showed only a small change in hole shape (i.e., perforated honeycomb structure bodies in which a hole having a stable shape was formed cou)d be produced successively). Since the hole could be formed (ground) by one feed (one step), the grinding step was significantly facilitated.

In Example 14 in which the wheel grinder had a relatively large groove width (i.e., the groove ratio was high), the wheel grinder was gradually worn out as the number of grinding operations increased so that the diameter of the hole decreased. However, the sharpness of the wheel grinder was not deteriorated.

According to the production method of Comparative Examples 1 to 3, abnormal noise occurred after grinding about ten holes. As a result of microscope observation of the tool, it was found that the amount of abrasive grains protruded from the tip of the grinding tool decreased.

According to the production method of Comparative Examples 4 to 7, since the ball end mill that was formed of cemented carbide powder and was not provided with abrasive grains was used, the ball blade was worn out to a large extent so that the diameter of the hole decreased. According to the production method of Comparative Examples 4 to 7, the cost required to form a hole was about 10 times that when using the ball end mill that was provided with the abrasive grains and could be recycled (e.g., Example 5).

According to the production method of Comparative Examples 8 to 11, since the regular drill of which the shoulder was formed at an acute angle was used, the hole showed chipping so that practical grinding is almost impossible.

### [Industrial Applicability]

The method of producing a perforated honeycomb structure body according to the present invention can be used to produce a honeycomb structure body having a hole that can receive a sensor or the like and is formed from the surface of the outer wall of the honeycomb structure body to pass through part of the outer wall and the partition wall. The perforated honeycomb structure body may be used as a honeycomb filter (e.g., diesel particulate filter (DPF)) or a catalyst carrier.

## Claims

1. A method of producing a perforated honeycomb structure body comprising:
(A) mixing and kneading a forming raw material that includes at least one of a ceramic raw material and a metal raw material to obtain a kneaded clay;
(B) forming the kneaded clay into a honeycomb shape to obtain a honeycomb formed body;
(C) drying and firing the honeycomb formed body to obtain a honeycomb structure body, the honeycomb structure body including a porous partition wall that defines a plurality of cells that serve as fluid passages, and an outer wall that is disposed to surround the partition wall; the method being **characterised by**:
(D) partially grinding the outer wall and the partition wall of the honeycomb structure body from a surface of the outer wall of the honeycomb structure body using a wheel grinder having grooves formed in its surface along a grinding direction, or a ball end mill provided with abrasive grains on its end, to obtain a perforated honeycomb structure body having a hole that is formed through part of the outer wall and the partition wall.

2. The method of producing a perforated honeycomb structure body according to claim 1, wherein the abrasive grains are disposed on the ball end mill by electrodeposition.

3. The method of producing a perforated honeycomb structure body according to claim 1, wherein the wheel grinder has two or more grooves having a maximum width of 0. 5 mm or more, a total width of the two or more grooves being 30% or less of a circumferential length of the wheel grinder in a rotation direction.

4. The method of producing a perforated honeycomb structure body according to any one of claims 1 to 3, wherein the outer wall and the partition wall are partially ground while setting a feed amount per rotation of the wheel grinder or the ball end mill at 0.002 to 0.15 mm.

5. The method of producing a perforated honeycomb structure body according to any one of claims 1 to 4, wherein the hole is formed in a normal direction to the surface of the outer wall of the honeycomb structure body, or formed in a direction at an angle of ±95° with respect to the normal direction to the surface of the outer wall of the honeycomb structure body.

## Patentansprüche

1. Verfahren zur Herstellung eines perforierten Wabenstrukturkörpers, umfassend:
(A) das Mischen und Kneten eines Formrohmaterials, welches zumindest eines aus einem keramischen Rohmaterial und einem metallischen Rohmaterial umfasst, um eine geknetete Tonerde zu erhalten;
(B) das Formen der gekneteten Tonerde in eine Wabenform, um einen wabenförmigen Körper zu erhalten;
(C)das Trocknen und Brennen des wabenförmigen Körpers, um einen Wabenstrukturkörper zu erhalten, wobei der Wabenstrukturkörper eine poröse Trennwand, welche eine Vielzahl von als Fluidkanäle fungierende Zellen definiert, sowie eine Außenwand umfasst, die so angeordnet ist, dass sie die Trennwand umgibt;
wobei das Verfahren durch Folgendes gekennzeichnet ist:
(D)das teilweise Abschleifen der Außenwand und der Trennwand des Wabenstrukturkörpers von einer Oberfläche der Außenwand der Wabenstrukturkörpers unter Verwendung eines Scheibenschleifers, welcher Rillen aufweist, die entlang einer Schleifrichtung in seiner Oberfläche ausgebildet sind, oder eines Kugelfräsers, der an seinem Ende mit Schleifkörnern versehen ist, um einen perforierten Wabenstrukturkörper zu erhalten, der ein Loch aufweist, welches durch einen Teil der Außenwand und der Trennwand ausgebildet ist.

2. Verfahren zur Herstellung eines perforierten Wabenstrukturkörpers nach Anspruch 1, worin die Schleifkörner auf dem Kugelfräser mittels Elektroabscheidung angeordnet sind.

3. Verfahren zur Herstellung eines perforierten Wabenstrukturkörpers nach Anspruch 1, worin der Scheibenschleifer zwei oder mehrere Rillen mit einer maximalen Breite von 0,5 mm oder mehr aufweist, wobei eine Gesamtbreite der zwei oder mehreren Rillen 30 % oder weniger einer Umfangslänge des Scheibenschleifers in einer Drehrichtung ist.

4. Verfahren zur Herstellung eines perforierten Wabenstrukturkörpers nach einem der Ansprüche 1 bis 3, worin die Außenwand und die Trennwand teilweise abgeschliffen werden, während ein Vorschub pro Drehung des Scheibenschleifers oder des Kugelfräsers auf 0,002 bis 0,15 mm eingestellt ist.

5. Verfahren zur Herstellung eines perforierten Wabenstrukturkörpers nach einem der Ansprüche 1 bis 4, worin das Loch in einer Normalenrichtung auf die Oberfläche der Außenwand des Wabenstrukturkörpers ausgebildet ist oder in einer Richtung in einem Winkel von ± 45 ° in Bezug auf die Normalenrichtung auf die Oberfläche der Außenwand des Wabenstrukturkörpers ausgebildet ist.

## Revendications

1. Procédé de production d'un corps à structure en nid d'abeilles perforé comprenant :
(A) le mélange et le malaxage d'une matière première de formage qui comprend au moins l'une d'une matière première à base de céramique et d'une matière première à base de métal pour obtenir une argile malaxée ;
(B) le formage de l'argile malaxée en une forme de nid d'abeilles pour obtenir un corps en forme de nid d'abeilles ;
(C) le séchage et la cuisson du corps en forme de nid d'abeilles pour obtenir un corps à structure en nid d'abeilles, le corps à structure en nid d'abeilles comprenant une paroi de séparation poreuse qui définit une pluralité de cellules qui servent de passages de fluide, et une paroi extérieure qui est disposée de manière à entourer la paroi de séparation ; le procédé étant **caractérisé par** :
(D) le meulage partiel de la paroi extérieure et de la paroi de séparation du corps à structure en nid d'abeilles à partir d'une surface de la paroi extérieure du corps à structure en nid d'abeilles en utilisant une meule comportant des rainures formées dans sa surface le long d'une direction de meulage, ou une fraise à extrémité sphérique pourvue de grains abrasifs sur son extrémité, pour obtenir un corps à structure en nid d'abeilles perforé comportant un trou qui est formé à travers une partie de la paroi extérieure et de la paroi de séparation.

2. Procédé de production d'un corps à structure en nid d'abeilles perforé selon la revendication 1, dans lequel les grains abrasifs sont disposés sur la fraise à extrémité sphérique par un dépôt électrolytique.

3. Procédé de production d'un corps à structure en nid d'abeilles perforé selon la revendication 1, dans lequel la meule comporte deux rainures ou plus ayant une largeur maximum de 0,5 mm ou plus, une largeur totale des deux rainures ou plus étant égale à 30 % ou moins d'une longueur circonférentielle de la meule dans une direction de rotation.

4. Procédé de production d'un corps à structure en nid d'abeilles perforé selon l'une quelconque des revendications 1 à 3, dans lequel la paroi extérieure et la paroi de séparation sont partiellement meulées tout en réglant une quantité d'avance par rotation de la meule ou de la fraise à extrémité sphérique de 0,002 à 0,15 mm.

5. Procédé de production d'un corps à structure en nid d'abeilles perforé selon l'une quelconque des revendications 1 à 4, dans lequel le trou est formé dans une direction normale à la surface de la paroi extérieure du corps à structure en nid d'abeilles, ou formé dans une direction selon un angle de ±45° par rapport à la direction normale à la surface de la paroi extérieure du corps à structure en nid d'abeilles.
